# EUROPÄISCHE PATENTANMELDUNG

(11) **EP 1 160 494 A2**
(43) Veröffentlichungstag der Anmeldung: **05.12.2001**
(21) Anmeldenummer: 01111383.4
(22) Anmeldetag: 10.05.2001
(51) Int. Cl.: F16K 27/00

(54) **Steuergehäuse für Ventil**

(30) Priorität: 30.05.2000 DE 10026564
(71) Anmelder: Conti Temic microelectronic GmbH, 90411 Nürnberg (DE)
(72) Erfinder: Altenrenger, Urban, 85057 Ingolstadt (DE); Binder, Markus, 85092 Kösching (DE); Dorfinger, Georg, 85080 Geimersheim (DE); Hoffmann, Richard, 85080 Geimersheim (DE); Kring, Willy, 85049 Ingolstadt (DE); Schirmer, Klaus, 86673 Bergheim (DE); Schlenker, Roberto, 85057 Ingolstadt (DE)
(74) Vertreter: Kolb, Georg

(57) **Zusammenfassung**

Bisherige Ventilsteuergeräte sind in Gehäusen aufgebaut, die einen Deckel und einen Rahmen aufweisen in dem die Ventilspulen vergossen sind. Zwischen dem Deckel und dem Rahmen befindet sich der Schaltungsträger mit den elektronischen Bauelementen. Bei dem neuen Ventilsteuergerät soll das Gehäuse entfallen und sich das Herstellverfahren vereinfachen.

Um das Gehäuse einzusparen wird das Ventilsteuergerät mitsamt dem Schaltungsträger (1) vergossen. Die Vergussmasse bildet das Gehäuse der Ventilsteuerung. Bei der Herstellung werden nach dem mechanischen und elektrischen Verbinden von Spulen und Schaltungsträger die Spulen (5) im Vergießwerkzeug fixiert und dann die komplette Anordnung vorzugsweise mit Epoxidharz vergossen.

Derartige Ventilsteuergeräte eignen sich aufgrund ihrer hohen Zuverlässigkeit für Anti-Blockier-Systeme, Anti-Schlupf-Regelungen, elektronische Bremskraftverstärkungen und elektronische Stabilisierungs-Programme im Kraftfahrzeug.

## Beschreibung

Die Erfindung betrifft ein Ventilsteuergerät gemäß dem Oberbegriff des Patentanspruchs 1. Ein solches Ventilsteuergerät ist beispielsweise ein elektronisches Steuergerät für ein Antiblockiersystem (ABS) in einem Kraftfahrzeug, bei dem die Bremsflüssigkeit, welche die Radbremsen betätigt, mit zwei Ventilen pro Rad gesteuert wird. Die Ventile werden durch einen Elektromagneten betätigt.

Die Erfindung betrifft auch ein Verfahren zum Herstellen eines solchen Ventilsteuergerätes.

Ein bekanntes ABS-System, wie in der EP 0499 670 A1 beschrieben, weist ein Gehäuse mit einem Gehäuserahmen und einem Deckel auf. In dem Gehäuserahmen sind Ventilspulen nachgiebig eingebettet. Dies wird dadurch erreicht, dass die Ventilspulen in ihrer Lage zu dem Gehäuserahmen positioniert und die Zwischenräume mit einer Vergußmasse aufgefüllt werden. Die Bestandteile der Ventilspule, wie umwickelter Spulenkörper und diesen umgebenden Jochring werden vor der Montage in den Gehäuserahmen mit einer Vergußmasse aufgefüllt. Danach werden die Ventilspulen in das Gehäuse montiert und durch Vergießen fixiert.

Nachteilig hierbei ist jedoch, dass mehrere Vergussvorgänge notwendig sind. Die Vergußmasse dient hierbei nicht als Gehäusebestandteil, sondern nur zur nachgiebigen Einbettung der Spulen. Diese nachgiebige Einbettung wiederum dient nur zum Toleranzausgleich, wenn später der Ventilblock auf das Ventilsteuergerät angebracht wird. Weitere Gehäuseteile sind notwendig, um die ganze Ventilsteuerung wasserdicht zu umhüllen.

In der DE 42 32 205 A1 werden in einem Gehäuserahmen eines Ventilsteuergerätes die Bestandteile einer Ventilspule, wie der umwickelte Spulenkörper, der Jochring und die Ventilspule selbst durch Spritzgießen mit einer Vergußmasse in einem Arbeitsgang nachgiebig eingebettet und als Gehäuseboden an einen Schaltungsträger angebracht. Auf der anderen Seite wird über den Schaltungsträger ein zusätzlicher Deckel montiert, der das Ventilsteuergerät wasserdicht verschließt.

Nachteilig bei diesem Ventilsteuergerät ist es, dass die vergossene Anordnung aufgrund des ungeschützten Schaltungsträgers gleichfalls ein zusätzliches Gehäuse benötigt, da die weiche Vergußmasse allein keinen zuverlässigen Schutz gegen Umwelteinflüsse bietet. Das separate Gehäuse wiederum erfordert Dichtlippen und Belüftungsmembrane, die den Schaltungsträger gegen Feuchtigkeit schützen.

Aufgabe der Erfindung ist es, ein Ventilsteuergerät zu schaffen, das dicht ist, wenig Gehäuseteile aufweist und einfach und kostengünstig hergestellt und montiert werden kann.

Diese Aufgabe wird erfindungsgemäß durch ein Ventilsteuergerät mit den Merkmalen von Patentanspruch 1 und durch ein Verfahren gemäß Patentanspruch 8 gelöst. Das erfindungsgemäße Ventilsteuergerät ist komplett vergossen. Der Schaltungsträger und die Ventilspulen sind formschlüssig mit Vergußmasse abgedeckt. Die formschlüssige Schutzabdeckung aus Vergußmasse bildet das Gehäuse des Ventilsteuergeräts, die einerseits die elektronischen und mechanischen Bauteile fixiert, das heißt in der gewünschten Position festhält und andererseits umhüllt, um diese vor Umwelteinflüssen, insbesondere Feuchtigkeit, zu schützen. Beim Verfahren zur Herstellung eines solchen Ventilsteuergeräts wird der Schaltungsträger mit den elektronischen Bauteilen und die Spulen mechanisch miteinander verbunden, die Spulen am Vergießwerkzeug fixiert, dann vergossen und zum Schluss ausgehärtet. Hierbei können als Vergußmasse auch unterschiedliche Materialien mit unterschiedlichen Eigenschaften verwendet werden. Die Vergußmasse kann nach der Verarbeitung hart und starr oder weich und elastisch sein. Sie kann jedoch auch an verschiedenen Stellen unterschiedliche Eigenschaften aufweisen, wie beispielsweise im Bereich der Spulen weich und elastisch und im Außenbereich und im Bereich der Leiterplatte hart und starr.

Die Vorteile der Erfindung sind, dass nur noch ein Vergießprozess benötigt wird, aber keine Montage mehr, bei der mehrere Teile zusammengefügt werden müssen, um das Ventilsteuergerät mit einem wasserdichten Gehäuse zu versehen. Dadurch entfällt der Prüfaufwand, insbesondere bezüglich der Gehäusedichtigkeit. Es werden keinen einzelnen, separaten Gehäuseteile mehr benötigt. Gleichfalls entfallen flexible Dichtungen, Dichtlippen und Belüftungsmembrane.

Vorteilhafte Weiterbildungen der Erfindung ergeben sich aus den Unteransprüchen. Hierbei können Jochbestandteile oder eine Metallplatte, die gleichfalls als Jochbestandteil dient und bzw. oder zur Wärmeabfuhr für die Leistungsbauelementen verwendet wird, zusätzlich in die Vergussmasse mit eingebettet werden. Auch wird entgegen der herkömmlichen Meinung keine weiche Vergussmasse verwendet sondern eine, die nach dem Aushärten hart und starr ist. Die Spulen sind dann unbeweglich in der Vergussmasse angeordnet. Der Toleranzausgleich erfolgt dann nicht mehr über die bewegliche Anordnung der Spulen in der Vergussmasse sondern über den Spuleninnendurchmesser. Auch wird bei anderen vorteilhaften Weiterbildungen das Joch als C-förmiges, glockenförmiges oder U-förmiges Joch ausgebildet und nachträglich nach dem Verguss an den Spulen angeordnet. Ferner kann die mechanische Verbindung zwischen Spule und Schaltungsträger gleichzeitig auch die elektrische Verbindung darstellen.

Die Erfindung soll nachfolgend anhand von Ausführungsbeispielen und Figuren näher erläutert werden. Die Figuren zeigen::
- Figur 1:: Ventilsteuergerät ohne Metallplatte
- Figur 2:: Spulenanordnung
- Figur 3a:: Seitenansicht Spulenkörper
- Figur 3b:: Vorderansicht Spulenkörper
- Figur 4a:: Seitenansicht Jochbügel
- Figur 4b:: Vorderansicht Jochbügel
- Figur 5:: Ventilsteuergerät mit Metallplatte
- Figur 6:: Spulenanordnung
- Figur 7a:: Seitenansicht Spulenkörper
- Figur 7b:: Vorderansicht Spulenkörper
- Figur 8a:: Seitenansicht glockenförmiges Joch
- Figur 8b:: Vorderansicht glockenförmiges Joch
- Figur 9a:: Seitenansicht U-förmiges Joch
- Figur 9b:: Vorderansicht U-förmiges Joch
- Figur 10a:: Jochplatte von unten
- Figur 10b:: Schnittdarstellung der Jochplatte

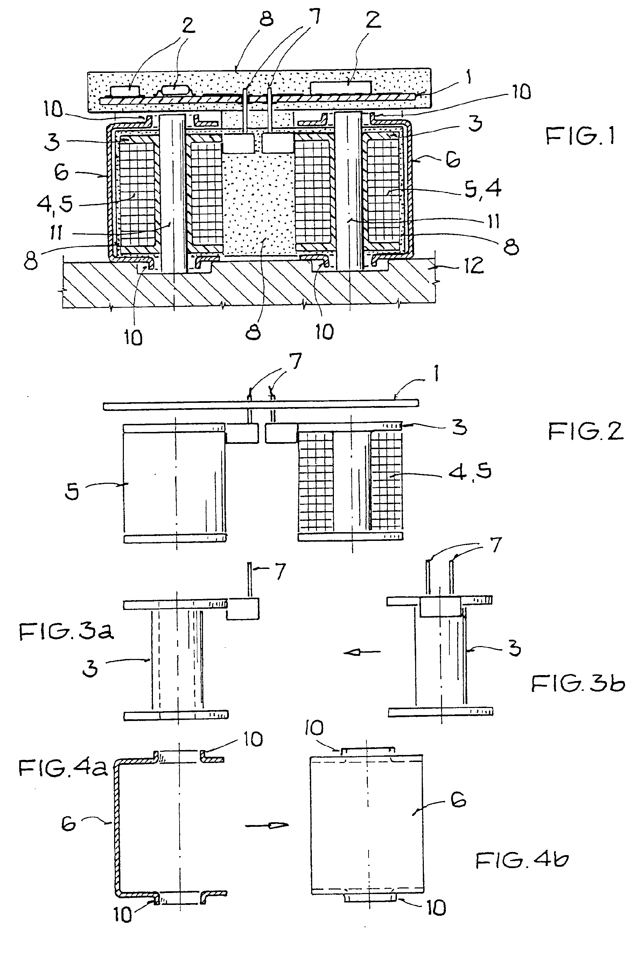

**Figur 1** zeigt ein vergossenes Ventilsteuergerät ohne Metallplatte mit angedeutetem Ventilblock **12.** In der Vergußmasse **8** befindet sich der Schaltungsträger **1,** insbesondere eine Leiterplatte, die mit den elektronischen Bauteilen **2** bestückt ist. Die elektronischen Bauteile **2** können ein Gehäuse aufweisen oder als blankes Chip, das auch durch die Vergußmasse **8** geschützt werden kann, auf dem Schaltungsträger **1** angebracht sein. Gleichfalls sind am Schaltungsträger **1** über die Vergußmasse Spulen **5** befestigt. Die Schutzabdeckung aus Vergußmasse ist an unterschiedlichen Stellen unterschiedlich dick und massiv. Der Zwischenraum zwischen zwei Spulen **5** ist komplett mit Vergußmasse **8** ausgefüllt Der verbleibende Spulenbereich, also die Spulenoberseite, -unterseite und der Außenbereich sind nur mit einem dünnen Überzug von Vergußmasse **8** abgedeckt. Der Schaltungsträger **1** ist mit einer etwas dickeren Schicht Vergußmasse **8** überzogen. In dieser Abbildung sind Grenzschichten zwischen den einzelnen vergossenen Komponenten angedeutet. Damit soll nahe gelegt werden, dass die Vergußmasse **8** auch aus unterschiedlichen Materialien bestehen kann, welche wiederum unterschiedliche Eigenschaften aufweisen können. Im Spulenbereich kann die Vergußmasse **8** weich und elastisch sein und im Bereich des Schaltungsträgers hart und starr. Im Bereich zwischen den Spulen **5** und dem Schaltungsträger **1** kann die Vergußmasse **8** nur geringe elastische Eigenschaften aufweisen. Zur Vereinfachung für die weitere Beschreibung der Anwendungsbeispiele wird davon ausgegangen, dass es sich um eine homogene Vergußmasse handelt, die an jeder Stelle die gleichen Eigenschaften und keine Grenzflächen aufweist und die nach der Verarbeitung hart und starr wird. Die von der Vergußmasse umgebenen Spulen, auch Ventilspulen genannt, bestehen aus Spulenkörper **3** und Wicklungen **4** und stellen die Elektromagneten dar, mit denen über die Ventildome **11** die Ventile des Ventilblocks **12** betätigt werden. Die elektrischen Spulenanschlüsse **7,** die seitlich am Spulenkörper **3** angebracht sind, ragen in die Leiterplatte **1.** In dieser Abbildung sind zwei Spulen dargestellt, die sich gegenüber stehen, so dass ihre seitlich angebrachten Spulenanschlüsse **7** benachbart sind. Dieser Aufbau ist besonders platzsparend. Die Spulen und der Schaltungsträger **1** sind komplett bis auf das Spuleninnere vergossen. Im Spuleninnern ist der Spulenkörper **3** sichtbar. Die Außenflächen des Spulenkörpers **3** und die Spulenwindungen **4** sind formschlüssig mit Vergußmasse **8** abgedeckt. Diese vergossene Anordnung schützt alle Komponenten, insbesondere die elektronischen Bauteile **2** vor ungünstigen Umgebungsbedingungen wie z.B. Wasser, Feuchte und Staub. Die Vergußmasse **8** besteht in diesem Fall aus Epoxidharz. Die Vergußmasse **8** wird nach dem Aushärten der Anordnung starr. Die vergossenen Komponenten, wie Spulen **5,** Schaltungsträger **1,** elektronische Bauteile **2** sind durch die Vergußmasse fixiert. Mit diesem Aufbau wird kein Gehäuse mehr benötigt. Die Vergußmasse **8** selbst bildet das Gehäuse aus. Zwischen den Spulen **5** und der Leiterplatte **1** sind Aussparungen ausgebildet, in die der Jochbügel **6** nach dem Vergießen eingebracht werden kann. Der Jochbügel **6** ist im Vergleich zu den elektronischen Bauteilen **2** unempfindlich gegen Umwelteinflüsse und wird in diesem Anwendungsbeispiel deshalb nicht mitvergossen, sondern nachträglich an der vergossenen Anordnung angebracht. Der Jochbügel **6,** der seitlich über die Spule geschoben wird, ist C-förmig ausgebildet und weist auf seiner Ober- und Unterseite einen Wulst **10** auf. Dabei werden die Wulste **10** des Jochbügels **6** zentrisch über dem Hohlraum, in den später der Ventildom **11** eingeführt wird, im Spulenkörper **3** positioniert. Des weiteren ist in dieser Abbildung neben dem Ventilsteuergerät auch die Hydraulikbaugruppe **12,** insbesondere der Ventilblock abgebildet, dessen Ventildome **11** in den Spulenkörper **3** ragen.
Um ein solches vergossenes Ventilsteuergerät herzustellen, ist es sinnvoll das Vergießwerkzeug so aufzubauen, dass es gleichfalls Dome ausbildet, welche in den Spulenkörper eingebracht werden und an denen die Spulen während des Vergießvorgangs fixiert sind. Vor dem Vergießen wurden die Spulenkörper **3** mit dem Schaltungsträger **1** verbunden. Hierbei bilden die Anschlusspins **7** der Spulenkörper **3** nicht nur die elektrische, sondern auch die mechanische Verbindung, durch die zumindest teilweise der Schaltungsträger **1** im Vergießwerkzeug fixiert wird.

**Figur 2** zeigt die Spulenanordnung mit dem Schaltungsträger im unvergossenen Zustand. Die beiden abgebildeten Spulen **5** bestehen jeweils aus einem Spulenkörper **3,** auf dem die Spulenwicklungen **4** angebracht sind. Die Anschlüsse **7** der Spulen **5** sind nicht symmetrisch bezüglich der Spulenachse herausgeführt, sondern sind an der Seite angebracht. Die Spulenanschlüsse **7** werden durch die Bohrungen des Schaltungsträgers **1,** insbesondere der Leiterplatte, gesteckt und sind dann über Presskräfte bzw. Lot fixiert. Sie bilden eine feste Einheit und können zusammen vergossen werden. Ferner ist zwischen den Spulen **5** und der Leiterplatte **1** ein Freiraum. Die seitlich angebrachten Anschlüsse und der Freiraum dienen dazu, einen Platz für den Jochbügel, der in dieser Abbildung nicht dargestellt ist und der nach dem Verguss seitlich über die Spulen geschoben wird, zu schaffen.

Die **Figuren 3a** und **3b** zeigen den Spulenkörper. In **Figur 3a** als Seitenansicht und in **Figur 3b** als Vorderansicht. Die Anschlüsse **7** werden hier seitlich am Spulenkörper **3** herausgeführt. Die Anschlüsse **7** haben nicht nur die Aufgabe einen elektrischen Kontakt zwischen Schaltungsträger und Spule herzustellen sondern stützen, wie in Figur 2 ersichtlich, die Leiterplatte während des Vergießens. Aus diesem Grund müssen die Anschlüsse **7** so dimensioniert werden, dass sie stabil genug sind, um dem Einpressprozess bzw. dem Lötprozess standzuhalten und den Schaltungsträger zu tragen. Des weiteren müssen Sie auch so angeordnet sein, dass sie dem Jochbügel nicht im Wege stehen. Der Durchmesser des Hohlraums im Spulenkörperinnern muss so groß gewählt werden, dass die zulässigen Toleranzen, die von der Anordnung der Ventildome im Ventilblock herstammen, ausgeglichen werden können. Die vergossenen Spulenkörper mit den Wicklungen sind nämlich später in der Vergussmasse fixiert und nicht mehr beweglich angeordnet. Der Spulenkörper besteht aus Kunststoff.

Die **Figuren 4a** und **4b** zeigen den Jochbügel in verschiedenen Perspektiven. In Figur 4a in der Seitenansicht und in Figur 4b in der Vorderansicht. Wie aus den Abbildungen ersichtlich, ist der Jochbügel **6** C-förmig und weist an seiner Ober- und Unterseite jeweils einen Wulst **10** auf, in den später der Ventildom eingeführt wird. Der Jochbügel **6** wird über den Spulenkörper, entsprechend den Figuren 3a und 3b geschoben. Da der Jochbügel **6,** der aus Blech besteht, erst nach dem Vergießen angebracht werden kann, kann dieser auch beweglich gelagert sein, so dass der Innendurchmesser der Wulste **10** nicht alle Toleranzen, die von der Anordnung der Ventildome im Ventilblock herstammen, ausgleichen muss. Der Toleranzausgleich erfolgt über die Beweglichkeit des Jochbügels **3.**

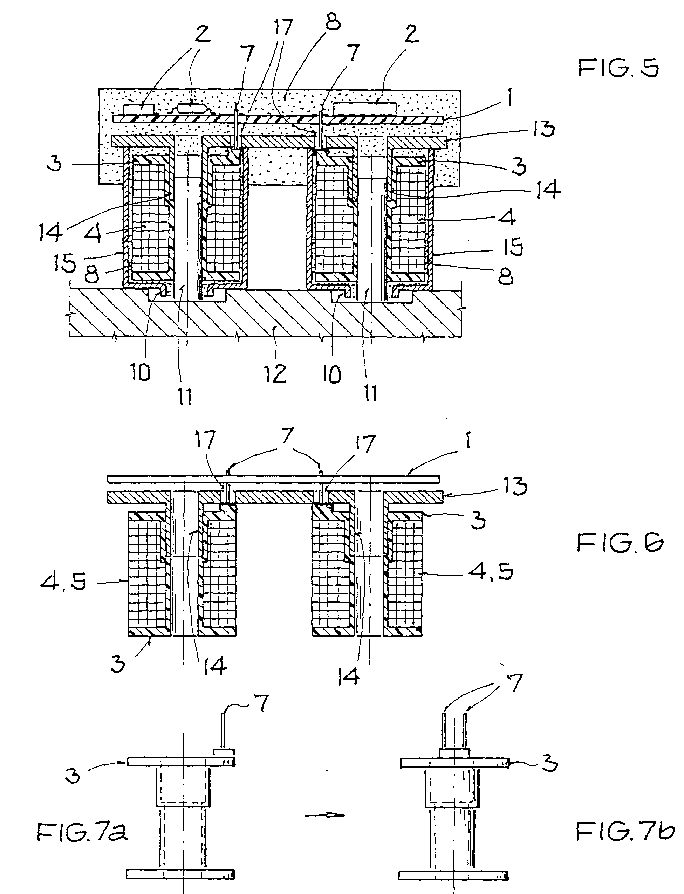

**Figur 5** zeigt ein vergossenes Ventilsteuergerät mit Metallplatte **13** und angedeutetem Ventilblock **12.** In der Vergußmasse **8** befindet sich der Schaltungsträger **1,** insbesondere eine Leiterplatte, die mit den elektronischen Bauteilen **2** bestückt ist. Die elektronischen Bauteile **2** können ein Gehäuse aufweisen oder als blankes Chip auf dem Schaltungsträger **1** angebracht sein. Gleichfalls sind am Schaltungsträger **1** Spulen befestigt, die einen Spulenkörper **3** und Wicklungen **4** aufweisen. Zwischen dem Schaltungsträger **1** und den Spulen ist eine Metallplatte **13** angeordnet. Die Metallplatte **13** weist Einzüge **14** auf, auf die der Spulenkörper **3** aufgesteckt ist. Die Metallplatte **13** hat im Anwendungsbeispiel gleich zwei Funktionen. Hauptsächlich dient sie als Jochbestandteil und zum anderen als Metallkörper zur Wärmeabfuhr von auf dem Schaltungsträger **1** montierten Leistungsbauelementen. Die mit der Metallplatte **13,** die nachfolgend auch als Jochplatte **13** bezeichnet wird, und dem Schaltungsträger **1** verbundenen Spulenkörper **3** und die Wicklungen **4** stellen die Elektromagneten dar, mit denen über den Ventildom **11** die Ventile des Ventilblocks **12** betätigt werden. Die elektrischen Spulenanschlüsse **7,** die seitlich am Spulenkörper **3** angebracht sind, ragen in die Leiterplatte **1.** In dieser Abbildung sind zwei Spulen dargestellt, die sich gegenüber stehen, so dass ihre seitlich angebrachten Spulenanschlüsse **7** benachbart sind. Dieser Aufbau ist besonders platzsparend. Die Spulen und der Schaltungsträger **1** sind komplett bis auf das Spuleninnere vergossen. Im Spuleninnern ist der innere Spulenkörper **3** sichtbar. Die Außenflächen des Spulenkörpers **3** und die Spulenwindungen **4** sind formschlüssig mit Vergußmasse **8** abgedeckt. Diese vergossene Anordnung schützt alle Komponenten, insbesondere die elektronischen Bauteile **2** vor ungünstigen Umgebungsbedingungen, wie z.B. Wasser, Feuchte und Staub. Die Vergußmasse **8** besteht in diesem Fall aus Epoxidharz. Die Vergußmasse **8** wird nach dem Aushärten der Anordnung starr. Die vergossenen Komponenten, wie Spulen, Schaltungsträger **1,** Jochplatte **13** und elektronische Bauteile **2** sind durch die Vergußmasse fixiert. Mit diesem Aufbau wird kein Gehäuse mehr benötigt. Die Vergußmasse **8** selbst bildet das Gehäuse aus. Zwischen den einzelnen Spulen sind Aussparungen ausgebildet, in welche die Jochglocke **15** nach dem Vergießen eingebracht werden kann. Die Jochglocke **15** ist im Vergleich zu den elektronischen Bauteilen **2** unempfindlich gegen Umwelteinflüsse und wird in diesem Anwendungsbeispiel deshalb nicht mitvergossen, sondern nachträglich an der vergossenen Anordnung angebracht. Die Jochglocke **15,** die von oben bzw. von unten über die Spule geschoben wird, ist glockenförmig ausgebildet und weist an der einen Seite einen Wulst **10** auf. Auf der gegenüberliegenden Seite wird dieser durch den Einzug **14** der Jochplatte 13 dargestellt. Dabei wird der Wulst **10** und der Einzug **14** der Jochplatte **13** zentrisch am Hohlraum des Spulenkörpers **3,** in den später der Ventildom **11** eingeführt wird, positioniert. Anstatt der Jochglocke **15,** welche die Spulenwicklung **4** komplett umschließt kann auch ein U-förmiges Joch verwendet werden, das die vergossene Spulenwicklung an zwei Seiten nicht bedeckt. Des weiteren ist in dieser Abbildung neben dem Ventilsteuergerät auch die Hydraulikbaugruppe **12,** insbesondere der Ventilblock abgebildet, dessen Ventildome **11** in den Spulenkörper **5** ragen.
Um ein solches vergossenes Ventilsteuergerät herzustellen ist es sinnvoll das Vergießwerkzeug so aufzubauen, dass es gleichfalls Dome ausbildet, welche in den Spulenkörper eingebracht werden und an denen die Spulen während des Vergießvorgangs fixiert sind. Vor dem Vergießen wurden die Spulen **5** mit dem Schaltungsträger **1** und mit der Metallplatte **13** verbunden. Hierbei bilden die Anschlusspins **7** der Spulenkörper **3** nicht nur die elektrische, sondern auch die mechanische Verbindung, durch die zumindest teilweise der Schaltungsträger **1** im Vergießwerkzeug fixiert wird. Der Formschluss zwischen Spulenkörper **3** und dem Einzug **14** der Metallplatte **13** bildet gleichfalls eine mechanische Fixierung während des Vergießvorgangs aus.

**Figur 6** zeigt die Spulenanordnung mit dem Schaltungsträger und der Jochplatte im unvergossenen Zustand. Die beiden abgebildeten Spulen **5** bestehen jeweils aus einem Spulenkörper **3,** auf dem die Spulenwicklungen **4** angebracht sind. Die Anschlüsse **7** der Spulen **5** sind nicht symmetrisch bezüglich der Spulenachse herausgeführt, sondern sind an der Seite angebracht. Die Spulenanschlüsse **7** werden durch Öffnungen **17** der Jochplatte **13** in die Bohrungen des Schaltungsträgers **1,** insbesondere der Leiterplatte, gesteckt und sind dann über Presskräfte bzw. Lot fixiert. Die Fixierung der Jochplatte **13** erfolgt, indem die Einzüge **14** der Jochplatte **13** in den Spulenkörper **3** formschlüssig eingebracht werden. Spulenkörper **3,** Schaltungsträger **1** und Metallplatte **13,** bilden eine feste Einheit und können zusammen vergossen werden. Ferner ist zwischen den einzelnen Spulen ein Freiraum angebracht. Dieser Freiraum dient dazu, einen Platz für die Jochglocke, die in dieser Abbildung nicht dargestellt ist und die nach dem Verguss von oben bzw. von unten über die Spulen geschoben wird, zu schaffen.

Die **Figuren 7a** und **7b** zeigen den Spulenkörper. In **Figur 7a** als Seitenansicht und in **Figur 7b** als Vorderansicht. Die Anschlüsse **7** werden hier seitlich am Spulenkörper **3** herausgeführt. Die Anschlüsse **7** haben nicht nur die Aufgabe einen elektrischen Kontakt zwischen Schaltungsträger und Spule herzustellen sondern stützen, wie in Figur 6 ersichtlich, die Leiterplatte während des Vergießens. Aus diesem Grund müssen die Anschlüsse **7** so dimensioniert werden, dass sie stabil genug sind, um dem Einpressprozess bzw. dem Lötprozess standzuhalten und den Schaltungsträger zu tragen. Des weiteren müssen Sie auch so angeordnet sein, dass sie der Jochglocke nicht im Wege stehen. Der Hohlraum im Innern des Spulenkörpers weist verschiedene Durchmesser auf. Der kleinere Durchmesser auf der einen Seite des Hohlraums im Spulenkörperinnern muss so groß gewählt werden, dass die zulässigen Toleranzen, die von der Anordnung der Ventildome im Ventilblock herstammen, ausgeglichen werden können. Die vergossenen Spulenkörper mit den Wicklungen sind nämlich später in der Vergussmasse fixiert und nicht mehr beweglich angeordnet. Der größere Durchmesser auf der anderen Seite muss zusammen mit der Blechstärke der Einzüge der Jochplatte wieder den kleineren ergeben. Der Spulenkörper besteht aus Kunststoff.

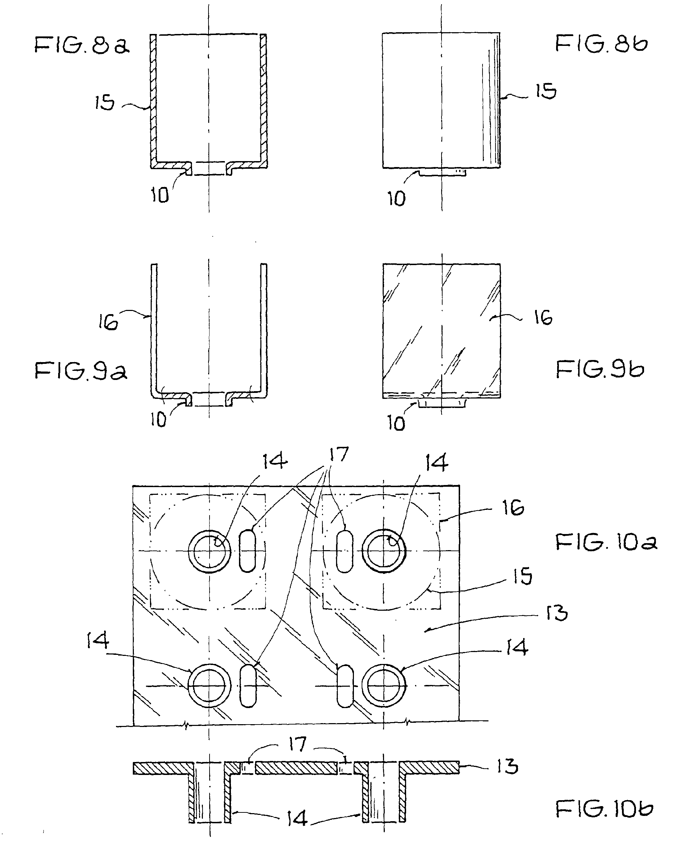

Die **Figuren 8a** und **8b** zeigen die Jochglocke in verschiedenen Perspektiven. In Figur 8a in der Seitenansicht und in Figur 8b in der Vorderansicht. Wie aus den Abbildungen ersichtlich, ist die Jochglocke **15** topfförmig und weist an der einen Seite einen Wulst **10** auf, in den später der Ventildom eingeführt wird. Die Jochglocke **15** wird über den Spulenkörper, entsprechend den Figuren 7a und 7b geschoben. Da die Jochglocke **15,** die aus Blech besteht, erst nach dem Vergießen angebracht werden kann, kann diese auch beweglich gelagert sein, so dass der Innendurchmesser des Wulstes **10** nicht alle Toleranzen, die von der Anordnung der Ventildome im Ventilblock herstammen, ausgleichen muss. Der Toleranzausgleich erfolgt über die Beweglichkeit der Jochglocke **3.**

Die **Figuren 9a** und **9b** zeigen anstatt einer Jochglocke ein U-förmiges Joch **16** in verschiedenen Perspektiven. In Figur 9a in der Seitenansicht und in Figur 9b in der Vorderansicht. Wie aus den Abbildungen ersichtlich, ist das Joch **16** U-förmig, das heißt es umschließt die Spule nicht vollständig wie die Glockenform, sondern ist an zwei Seiten geöffnet. Auch dieser Aufbau weist an der einen Seite einen Wulst **10** auf, in den später der Ventildom eingeführt wird. Das U-förmige Joch **16** wird über den Spulenkörper, entsprechend den Figuren 7a und 7b, geschoben. Da das U-förmige Joch **16,** das aus Blech besteht, erst nach dem Vergießen angebracht werden kann, kann dieses auch beweglich gelagert sein, so dass der Innendurchmesser des Wulstes **10** nicht alle Toleranzen, die von der Anordnung der Ventildome im Ventilblock herstammen, ausgleichen muss. Der Toleranzausgleich erfolgt über die Beweglichkeit des U-förmigen Jochs **16.**

**Figur 10a** zeigt die Jochplatte **13** von unten vor der Montage mit den anderen Bauteilen und dem Verguss. Auf die kreisförmigen Einzüge **14** werden die Ventilspulen gesteckt. Neben den Einzügen **14** befinden sich Öffnungen **17,** um später die Spulenanschlüsse durch die Jochplatte hindurch zum Schaltungsträger zu führen. Gleichfalls ist zur Verdeutlichung des späteren Aufbaus in dieser Abbildung der Grundriss der Jochglocke **15** und des U-förmigen Jochs **16** dargestellt, die jeweils zusammen mit der Jochplatte das Joch für eine Spule ergeben.

**Figur 10b** zeigt die Schnittdarstellung durch die Jochplatte. Die metallene Jochplatte **13** weist Einzüge **14** auf, die aus der Ebene der Jochplatte hervorstehen. Sie werden später in das Spuleninnere eingeführt. Die Öffnungen **17** in der Jochplatte **13** dienen dazu, die Spufenanschlüsse, welche die elektrische und mechanische Verbindung zum Schaltungsträger darstellen, durchzuführen.

Für die dargestellten Anwendungsbeispiele ist es naheliegend, dass die formschlüssig angebrachte Vergußmasse nicht homogen sein muss, sondern aus unterschiedlichen Materialen bestehen kann und die unterschiedlichen Materialien auch stufenweise angebracht werden können.

Ferner können auch die Jochbestandteile **6, 15, 16,** die in den Anwendungsbeispielen nicht unter der Vergußmasse angeordnet sind, mit den anderen Komponenten formschlüssig vergossen werden, wodurch ein weiterer Montageschritt eingespart wird.

## Patentansprüche

1. Ventilsteuergerät, bestehend aus einem Schaltungsträger (1) und Ventilspulen (5), die mit dem Schaltungsträger (1) elektrisch verbunden sind und mit einem den Schaltungsträger (1) und die Ventilspulen (5) aufnehmenden Gehäuse, **dadurch gekennzeichnet, dass** der Schaltungsträger (1) und die Ventilspulen (5) in einer gemeinsamen formschlüssigen Schutzabdeckung als Gehäuse angeordnet sind und diese Schutzabdeckung aus einer Vergußmasse (8) besteht.

2. Ventilsteuergerät nach Patentanspruch 1, **dadurch gekennzeichnet, dass** zusätzlich eine Metallplatte (13) in der Vergußmasse (8), die als Gehäuse dient, eingebettet ist.

3. Ventilsteuergerät nach Patentanspruch 1 oder 2, **dadurch gekennzeichnet, dass** zusätzlich Jochbestandteile (6, 15, 16) in der Vergußmasse (8), die als Gehäuse dient, eingebettet sind.

4. Ventilsteuergerät nach Patentanspruch 2, **dadurch gekennzeichnet, dass** ein glockenförmiges Joch (15) über der vergossenen Spule (5) angeordnet ist.

5. Ventilsteuergerät nach Patentanspruch 2, **dadurch gekennzeichnet, dass** ein U-förmiges Joch (16) über der vergossenen Spule angeordnet ist.

6. Ventilsteuergerät nach Patentanspruch 1, **dadurch gekennzeichnet, dass** ein C-förmiges Joch (6) seitlich an der vergossenen Spule (5) angeordnet ist.

7. Ventilsteuergerät nach Patentanspruch 1 oder 2, **dadurch gekennzeichnet, dass** die aus Vergußmasse (8) bestehende Schutzabdeckung hart und wasserdicht ist.

8. Ventilsteuergerät nach Patentanspruch 1 oder 2, **dadurch gekennzeichnet, dass** die Vergußmasse (8) aus Epoxidharz besteht.

9. Verfahren zur Herstellung eines Ventilsteuergeräts mithilfe eines Vergießwerkzeuges nach Patentanspruch 1, **dadurch gekennzeichnet, dass**
- der Schaltungsträger (1) mit den elektronischen Bauteilen (2) und die Spulen (5) mechanisch verbunden werden,
- die Spulen (5) auf Dome des Vergießwerkzeuges aufgesteckt werden,
- die Spulen (5) zusammen mit dem Schaltungsträger (1) vergossen werden und anschließend,
- eine Aushärtung der Vergußmasse (8) erfolgt.

10. Verfahren zur Herstellung eines Ventilsteuergeräts Mithilfe eines Vergießwerkzeuges nach Patentanspruch 2, **dadurch gekennzeichnet, dass**
- der Schaltungsträger (1) mit den elektronischen Bauteilen (2), die Metallplatte (13) und die Spulen (5) mechanisch verbunden werden,
- die Spulen (5) auf Dome des Vergießwerkzeuges aufgesteckt werden,
- die Spulen (5) zusammen mit dem Schaltungsträger (1) und der Metallplatte (13) vergossen werden und zum Schluss,
- eine Aushärtung der Vergußmasse (8) erfolgt.

11. Ventilsteuergerät, hergestellt nach einem Verfahren gemäß Patentanspruch 9 oder 10, **dadurch gekennzeichnet, dass** die mechanische Verbindung zwischen Schaltungsträger (1) und Spule (5) gleichzeitig auch die elektrische Verbindung (7) ist.
